# Europäisches Patentamt

## European Patent Office

## Office européen des brevets

(11) Publication number: **0 137 510**
**B1**

(12) **EUROPEAN PATENT SPECIFICATION**

(45) Date of publication of patent specification: **29.07.87**

(51) Int. Cl.⁴: **B 01 D 33/10**

(21) Application number: **84112268.2**

(22) Date of filing: **12.10.84**

(54) **Apparatus for dynamic separation of suspensions of solid bodies in liquids.**

(30) Priority: **12.10.83 PL 244126**

(43) Date of publication of application:
**17.04.85 Bulletin 85/16**

(45) Publication of the grant of the patent:
**29.07.87 Bulletin 87/31**

(84) Designated Contracting States:
**DE FR SE**

(56) References cited:
**DE-A-1 274 558**
**FR-A-2 148 732**
**FR-A-2 204 443**
**US-A-2 793 186**
**US-A-3 262 573**

(73) Proprietor: **Politechnika Warszawska**
**Plac Jednosci Robotniczej 1**
**Warschau (PL)**

(72) Inventor: **Mróz, Andrzej, Dr.-Chem.**
**ul. Grójecka 40/1**
**Warszawa (PL)**
Inventor: **Wrónski, Stanislaw, Prof.-Chem.**
**ul. Republikánska 8/2**
**Warszawa (PL)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

This invention relates to an apparatus for a dynamic separation of suspensions of solid bodies in liquids.

Those skilled in the art known from Polish Patent Specification No. 117 022 apparatus for classification or separation of suspensions of solid bodies in liquids, wherein the suspension of be classified is directed to an annular space, where it is mixed and separated by means of a rotating cylindrical perforated element covered with a gauze; through said gauze a suspension of particles of a solid body of diameter smaller than the gauze mesh flows to the interior of said cylindrical element and next is ejected outside the apparatus as a result of the vacuum produced. The suspension containing particles of diameter greater than the gauze mesh moves down in the cylindrical space between the body and the rotating cylindrical element toward the bottom of the apparatus, wherefrom it is drained by an outlet stub pipe.

In the apparatus so far known, all the particles of the solid phase with diameter greater than the gauze mesh are mixed by the rotating cylinder over the whole height of the apparatus. Simultaneously with this mixing operation, smaller particles of the solid phase flow inside the rotating cylinder which leads to a non-uniform operation of the apparatus and to a non-sharp separation of the particles of the solid body, because each element of the rotating cylinder operates in different hydrodynamic conditions. What is more, the suspension of the particles having diameters greater than the gauze mesh is moved toward the outlet stub pipe only by gravity and, in consequence, it is not thickened and, for this reason, additional thickening facilities must be used.

From FR—A—2148732 it is known to provide in such apparatus vertical baffles to disturb the flow in the annular space in order to avoid clogging of the gauze.

The aim of the invention has been the design of an apparatus applicable for a dynamic classification of suspensions of solid bodies in liquids which would not have the above-mentioned inconveniences, and which would enable both a sharp enough separation of the suspension into the individual fractions of the required granulation and the obtaining of suspensions of particles of diameter greater than the gauze mesh with considerable concentration.

It has been shown that this aim can be achieved by mounting suitable annular diaphragms coaxially inside the cylindrical space of the classifying apparatus between the inner wall of the body and the gauze. These diaphragms should not be in contact with the body and the gauze, and should be situated at such distances that the outer edge of the diaphragm lying above would be situated below the level of the inner edge of the diaphragm lying below. The rotating cylindrical element may be connected to a thickening worm.

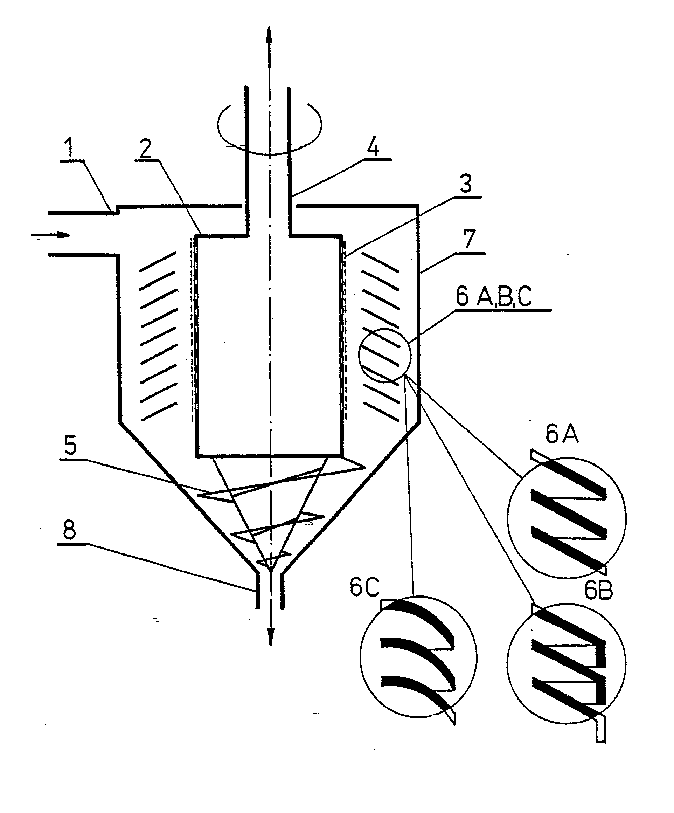

Apparatus according to several embodiments of the invention is shown by way of example in the accompanying drawing presenting a longitudinal section of the apparatus, comprising inlet pipe stub 1, rotating cylindrical element 2, gauze 3, hollow driveshaft 4, thickening worm 5 annular diaphragms 6A, 6B and 6C, body 7 of the apparatus and outlet stub pipe 8.

The principle of operation of the apparatus according to the invention consists in that a raw suspension is supplied through a tangential stub pipe 1 to the annular space between the body 7 and the rotating cylinder 2 covered with gauze 3 and is directed to the zone of a violent agitation produced by the rotary motion of the cylinder 2. As a result of the action of centrifugal force and tangential stresses, particles of diameters greater than the gauze mesh are thrown outwards toward the body of the apparatus 7. In consequence of the presence of annular diaphragms 6, these particles fall down under gravity forces to the bottom part of the body 7 and do not return to the zone of operation of the rotating cylindrical element 2, whereas the suspension of particles of solid phase of diameters smaller than the gauze mesh 3 flows through the gauze mesh 3 into the rotating cylindrical element 2 as a result of the existing pressure differences, and next is directed outwards through the hollow drive shaft 4.

The particles of dimensions greater than the gauze mesh falling down under gravity forces along the body of the apparatus enter the zone of operation of the thickening worm 5, where the suspension is thickened and, simultaneously, it is being moved toward the outlet pipe stub 8 and ejected outward through this pipe. As a result, a sharp separation of the suspension particles is obtained and the suspension of particles greater than the gauze mesh has high enough concentration. An additional advantage of the apparatus according to the invention consists in a diminished erosive action of the particles on the gauze, this being due to reduction of direct contact of the gauze with the particles of solid phase of greater diameters.

The annular diaphragms may take various forms as shown at 6A, 6B and 6C. However, in each case, as illustrated, it is important that the outer edge of each diaphragm is below the inner edge of the directly underlying diaphragm when provided. (Of course, the lowest diaphragm has no underlying diaphragm).

The diaphragms 6A and 6B are substantially frustoconical, each diaphragm 6B having in addition a depending skirt on its outer edge. Diaphragms 6C are curved (convexly when viewed from above) in planes parallel to the axis of rotation of cylinder 2.

## Claims

1. Apparatus for a dynamic separation of suspensions of solid bodies in liquids consisting of a cylindrical body (7) with a conical bottom terminated with an outlet stub pipe (8), said apparatus being provided with an inlet stub pipe (1) and a rotating cylindrical perforated element (2) situated coaxially, said element (2) being covered with a gauze (3) and mounted on a hollow drive shaft (4), characterised in the cylindrical space between the inner wall of the body (7) and the gauze (3) there are mounted at least two annular diaphragms (6) which do not contact the body and the gauze and are so spaced from one another that the outer edge of an upper one of the diaphragms (6) lies below the inner edge of a lower one of the diaphragms (6).

2. Apparatus according to claim 1 characterised in that the rotating cylindrical element (3) is connected to a thickening worm (5).

3. Apparatus according to claim 1 or 2 characterised in that each diaphragm is substantially frusto-conical.

4. Apparatus according to claim 3 characterised in that each diaphragm has a depending skirt on its outer edge.

5. Apparatus according to claim 1 or 2 characterised in that each diaphragm is curved in planes parallel to the axis of rotation of said element.

## Patentansprüche

1. Vorrichtung für eine dynamische Trennung von Suspensionen von Festkörpern in Flüssigkeiten, bestehend aus einem zylindrischen Körper (7) mit einem kegekförmigen Boden, abgeschlossen mit einem Ausgangsstutzen (8), wobei die Vorrichtung mit einem Eingangsstutzen (1) und einem rotierenden zylindrischen gelochten Element (2), koaxial angeordnet versehen ist und das Element (2) mit einer Gaze (3) abgedeckt und auf einer hohlen Antriebswelle (4) befestigt ist, dadurch gekennzeichnet, daß wenigstens zwei ringförmige Membranen (6) in dem zylindrischen Raum zwischen der Innenwand des Körpers (7) und der Gaze (3) montiert sind, die den Körper und die Gaze nicht berühren und derart voneinander getrennt sind, daß die äußere Kante einer oberen der Membranen (6) unter der Innenkante einer unteren der Membranen (6) liegt.

2. Vorrichtung nach Anspruch 1, dadurch gekennzeichnet, daß das rotierende zylindrische Element (3) mit einer Verdickungsschnecke (5) verbunden ist.

3. Vorrichtung nach Anspruch 1 oder 2, dadurch gekennzeichnet, daß jede Membran im wesentlichen kegelstumpfförmig ist.

4. Vorrichtung nach Anspruch 3, dadurch gekennzeichnet, daß jede Membran eine herabhängende Schürze an ihrer äußeren Kante hat.

5. Vorrichtung nach Anspruch 1 oder 2, dadurch gekennzeichnet, daß jede Membran in parallel zur Rotationsachse es Elements liegenden Ebenen gekrümmt ist.

## Revendications

1. Appareil pour la séparation dynamique de suspensions de corps solides dans des liquides, comprenant un corps cylindrique (7) avec un fond conique se terminant par une tubulure de sortie (8), l'appareil étant muni d'une tubulure d'admission (1) et d'un élément cylindrique perforé (2) qui est entraîné en rotation coaxialement à l'intérieur du corps, cet élément (2) étant recouvert d'une toile métallique (3) et monté sur un abrre d'entraînement creux (4), caractérisé en ce que l'espace cylindrique entre la paroi interne du corps (7) et la toile métallique (3) contient au moins deux diaphragmes ou chicanes annulaires (6) qui sont montés de manière qu'ils ne viennent pas en contact avec le corps de l'appareil, ni avec la toile, et qu'ils soient disposés l'un au-dessus de l'autre à une distance telle que le bord extérieur d'une chicane (6) est situé plus bas que le bord intérieur de la chicane (6) sousjacente.

2. Appareil selon la revendication 1, caractérisé en ce que l'élément cylindrique tournant (2) est raccordé à une vis d'épaississement (5).

3. Appareil selon la revendication 1 ou 2, caractérisé en ce que chaque chicane possède une forme sensiblement tronconique.

4. Appareil selon la revendication 3, caractérisé en ce que chaque chicane porte une jupe s'étendant vers le bas à partir de son bord extérieur.

5. Appareil selon la revendication 1 ou 2, caractérisé en ce que chicane possède und forme courbe dans des plans parallèles à l'axe de rotation dudit élément.